# EUROPEAN PATENT SPECIFICATION

(11) **EP 2 192 846 B1**
(45) Date of publication and mention of the grant of the patent: **13.11.2013**
(21) Application number: 08876685.2
(22) Date of filing: 26.06.2008
(51) Int. Cl.: A23L 1/236

(54) **SWEETENER COMPOSITIONS**
SÜSSUNGSZUSAMMENSETZUNGEN
COMPOSITIONS D ÉDULCORANT

(30) Priority: 29.06.2007 US 947057 P
(43) Date of publication of application: 09.06.2010
(73) Proprietor: McNeil Nutritionals, LLC, Fort Washington, PA 19034 (US)
(72) Inventor: CATANI, Steven J., Athens, GA 19525 (US); COLLINS, Norman E., III, Ithaca, NY 14850 (US); JUNA, James P., Yardley, PA 19067 (US); WIDOR, Eric H., Gilbertsville, PA 19525 (US); NAVIA, Juan L., Doylestown, PA 18902 (US)
(74) Representative: Kirsch, Susan Edith
(86) International application number: PCT/US2008/068353
(87) International publication number: WO 2010/042093

(56) References cited:
- EP-A1- 0 430 663
- EP-A1- 0 913 148
- EP-A2- 0 303 295
- WO-A1-2006/115680
- WO-A1-2007/001501
- WO-A1-2007/061757
- WO-A1-2009/001063
- WO-A2-2004/040991
- WO-A2-2008/036229
- JP-A- 2004 305 165
- US-A1- 2006 286 248
- US-B1- 7 147 883
- DATABASE WPI Week 199021 Thomson Scientific, London, GB; AN 1990-161253 XP002579266 & JP 02 104259 A (MITSUBISHI KASEI CORP) 17 April 1990 (1990-04-17)
- DATABASE WPI Week 200237 Thomson Scientific, London, GB; AN 2002-333898 XP002579267 & JP 2002 027942 A (BIOENERGENE CO LTD) 29 January 2002 (2002-01-29)
- DATABASE WPI Week 199005 Thomson Scientific, London, GB; AN 1990-034147 XP002579268 & JP 01 312960 A (MITSUBISHI KASEI CORP) 18 December 1989 (1989-12-18)
- Vaclavik, V. A. ; Christian, E. W.: "Sugars, Sweeteners, and Confections" In: "Essentials of Food Science, Second Edition", 2003, Springer Science + Business Media, Inc., New York, NY 10013 pages 300-301,
- GOOSENS, J. ; GONZE, M.: "ERYTHRITOL", THE MANUFACTURING CONFECTIONER, January 2000 (2000-01), pages 71-75,

## Description

### Field of the Invention

The present invention is directed to erythritol-based sweetener compositions. The erythritol-based sweetener compositions of the present invention include erythritol and a secondary sweetener together in a single solid matrix.

### Background of the Invention

People often customize the taste of food and beverages by adding sweeteners thereto. Sweetening food or beverages with a tabletop sweetener alters its flavor and usually increases its appeal. This behavior is found in all cultures, but is especially prevalent in western cultures.

Personal taste creates considerable variability in the amount of sweetness that one person prefers in a given food or beverage versus another person. For example, the amount of sweetness incorporated into a foodstuff during commercial production may not be adequate to satisfy some consumers while other consumers may find the same amount of sweetness to be excessive. Moreover, consumers often desire to reduce their caloric intake for health or lifestyle reasons. Therefore, there exists a long-felt need for tabletop sweetener products that consumers may use to increase the sweetness of a product at the time of consumption that are consistent with their personal preferences and minimize additional caloric burden.

Tabletop sweeteners are the primary vehicle by which such taste customization is accomplished. Many types of sweeteners are available as tabletop sweeteners. These include simple sugars, e.g., sucrose, fructose, and ketose; complex sweeteners, e.g., honey, molasses, and agave nectar; and high intensity sweeteners, e.g., sucralose, saccharine, and aspartame. Tabletop sweeteners are presently available in many different forms, including, granular, cohesive non-free flowing compositions (e.g., cubes and tablets), and the like.

Erythritol is a natural, low calorie sweetener. It has a bright, sweet taste that is about 70% the sweetness of sucrose (cane sugar) on a weight basis. It is found in grapes and other fruits and can be produced in large quantities by fermentation from sugar. It contains less than 0.2 kcals per gram providing the equivalent of a teaspoon of sugar for around 1.2 kcals. While the caloric content is not as low as high intensity sweeteners, it compares very favorable with sucrose (16 kcals/tsp), fiuctose (∼14 Kcal/tsp SES), and tagatose (6.6 kcals/tsp SES) for those seeking to reduce calories.

While the sweet taste is pleasant, erythritol has a high negative heat of solution and provides a cooling sensation. Further the sweet taste is very monochromatic and lacks the flavor complexity of many natural sweeteners. While erythritol's caloric burden is low, the above taste properties are not considered ideal for tabletop sweeteners.

Several strategies have been used to overcome erythritol's taste problems. One solution to the negative heat of solution has been to combine erythritol with a material having a positive heat of solution, e.g., fructo-oligosaccharides ("FOS"), inulin, and glycerin. Unfortunately, these material suffer from their shortcomings, e.g., inulin has a propensity to cause gas and bloating when consumed in moderate to large quantities.

In co-pending US patent application 2009/011104, there is described a solid sweetening composition having erythritol and a complex sweetener in a single matrix, wherein the composition is produced by melting erythritol, adding the complex sweetener to the melted erythritol, cooling the mixture and grinding the resulting mass. The taste of many complex sweeteners complement erythritol's taste, but formulating a stable composition with a combination of complex sweeteners and erythritol is challenging. Traditional methods of making such mixtures are not appropriate. For example, multiple attempts to produce a moisture stable solid composition by agglomeration of agave syrup onto erythritol crystals produced a sticky mass that was not useful as a sweetening composition. Likewise dry-blends of erythritol and molasses solids produced a blend as hydroscopic as the initial molasses.

What is needed is a solid sweetening composition having erythritol and a secondary sweetener in a single matrix that is stable and produces a favorable flavor profile for use as a tabletop sweetener. A process has been discovered that produces such a solid sweetening composition. The process uses only enough heat is provided to melt a portion of the erythritol. The result is slurry of liquid erythritol and solid erythritol that has a consistency that varies from thin slurry to a thick paste. A solid, stable, homogeneous, sweetening composition can be made by suspending the complex sweeteners in the partially melted erythritol followed by cooling and grinding the resultant solid.
JP 02 104259 A discloses sweeteners comprising erythritol and sucrose.
WO 2006/115680 A1 discloses solid compositions of erythritol and the high intensity sweetener sucralose.
WO 2007/061757 describes a tabletop sweetener comprising erythritol.

### Summary of the Invention

The present invention is directed to the solid sweetening composition set out in claim 1. The solid sweetening composition can consist of, or can consist essentially of, erythritol and the recited secondary sweetener. Preferred features are set out in claims 2 and 3.

The present composition can be prepared by a method comprising, consisting of and/or consisting essentially of the steps of melting the erythritol; mixing the secondary sweetener into the melted erythritol to obtain a mixture; cooling the mixture until the mixture is solid; and grinding the solid mixture to a desired particle size, wherein the erythritol is at least about 50% by weight of the composition. Optionally, the composition is agitated, stirred or mixed during cooling. The secondary sweetener is selected from the group consisting of muscavado, turbinado sugar, demerara sugar and combinations thereof. Suitably erythritol is present in an amount that is at least 60% by weight of the composition. The method can further comprise the step of removing water during mixing. Preferably the erythritol is partially melted, more preferably from about 10% to about 90% of the erythritol is melted. The degree of melting erythritol is suitably measured by agitator or screw feed power. Optionally, a high intensity sweetener is mixed with the erythritol. The high intensity sweetener can be sucralose or stevia extract. The method can be carried out in a batch mode, or in a continuous or semi-continuous mode. Suitably, the melting step is carried out continuously, for example the erythritol and the secondary sweetener are propelled continuously or in a series of intermittent motions through a vessel in which part of the vessel's surface is heated at a temperature to partially melt the erythritol flowing through the vessel. Suitably, the residence time in the vessel is less than 10 minutes, preferably less than 5 minutes. The diameter of the vessel is preferably less than 10% of the vessel's length, for example, the vessel is a pipe. Suitably, the mixture is propelled through the vessel with screws.

Also disclosed is a slurry comprising solid erythritol, liquid erythritol and the secondary sweetener, where the secondary sweetener is selected from the group consisting of muscavado, turbinado sugar, demerara sugar, and combinations thereof. Preferably the composition can optionally further comprise a high intensity sweetener such as sucralose, an extract of the stevia plant, an extract of the lo han plant and combinations thereof.

The present invention can be used in a method of sweetening a comestible comprising, consisting of and/or consisting essentially of adding a sweetening amount of the present solid sweetening composition comprising, consisting of and/or consisting essentially of erythritol and the secondary sweetener, where the secondary sweetener is selected from the group consisting of muscovado, turbinado sugar, demerara sugar; and combinations thereof.

### Detailed Description

As used herein, the term "secondary sweeteners" means complex sweeteners selected from the group consisting of muscovado, turbinado sugar, demerara sugar, and combinations thereof. In each case the resultant composition retains the same flavor notes of the complex sweetener. Other sugars can optionally additionally be used, including sucrose, fructose, kestose and the like.

As used herein, the term "high intensity sweetener" means a substance that provides a high sweetness per unit mass compared to a nutritive sweetener and provides little or no nutritive value. Many high intensity sweeteners are known to those skilled in the art and any may be used in the present invention. Examples of high intensity sweeteners useful in the present invention include, for example, aspartame, acesulfame, alitame, brazzein, cyclamic acid, dihydrochalcones, extract of *Dioscorophyllum cumminsii,* extract of the fruit of *Pentadiplandra brazzeana,* glycyrrhizin, hernandulcin, monellin, mogroside, neotame, neohesperidin, saccharin, sucralose, extracts of sweet plants, such as, stevia, thaumatin, salts, and combinations thereof. A preferred high intensity sweetener according to the present invention is sucralose. Another preferred high intensity sweetener according to the present invention is stevia and more specifically rebaudioside-A.

As used herein, the term "sugar alcohol" means a food-grade alcohol derived from a sugar molecule. Sugar alcohols useful in the present invention include, for example, isomalt, erythritol, hydrogenated isomaltulose, hydrogenated starch hydrolyzates, lactitol, maltitol, mannitol sorbitol, xylitol, and combinations thereof.

As used herein, a "food-grade" material is one that conforms to the standards for foods deemed safe for human consumption set forth in the Codex Alimentarius produced by the World Health Organization (1999).

As used herein, a gram (or other given amount) of Sucrose Equivalent Sweetness ("SES") means the amount of high intensity sweetener needed to be added to an 8 ounce glass of water in order to provide the same sweetness as an independent 8 ounce glass of water containing one gram (or the other given amount) of sucrose. For example, 1/200 g of aspartame will equal about one gram of SES because aspartame is about 200 times sweeter than sucrose. Similarly, about 1/500 g to about 1/600 g of sucralose will provide one gram of SES because sucralose is about 500 to about 600 times sweeter than sucrose.

As used herein the term "partially melted erythritol" means a composition, with or without other ingredients or components, that has been heated to a temperature sufficient to melt part of the erythritol to provide a slurry of melted and solid erythritol.

As used herein, all numerical ranges provided are intended to expressly include at least all numbers that fall between the endpoints of ranges.

### Erythritol

Erythritol (butane-1,2,3,4-tetraol) is a natural, low calorie sweetener that has long been part of the human diet. It has a bright, sweet taste that is about 70% the sweetness of sucrose (i.e., cane sugar) on a weight basis. Erythritol contains less than 0.2 kcals per gram providing the equivalent of a teaspoon of sugar for around 1.2 kcals. While this is not as low as high intensity sweeteners like sucralose, which have no calories, it compares very favorable with sucrose (16 kcals/tsp), fructose (14 kcal/tsp SES), and tagatose (6.6 kcals/tsp SES).

Erythritol is absorbed into the bloodstream in the small intestine, and then for the most part excreted unchanged in the urine. Because erythritol is normally absorbed before it enters the large intestine, it does not normally cause laxative effects as are often experienced after over-consumption of other sugar alcohols and most people will consume erythritol with no side effects. This is unique, as other sugar alcohols are not absorbed directly by the body in this manner.

Erythritol has been used in other ways. For example it is known to mask bitter and metallic tastes from certain high intensity sweeteners. A well known example is extracts of the native south American plant *Stevia Rebaudiana Compositae Bertoni.* The components of the aqueous extracts of this plant, known as steviosides and rebaudiosides are very sweet (180-300 times sweeter than sucrose) but have metallic and bitter notes. Previously disclosed formulas use small amounts of erythritol to mask the bitter notes in compositions where the primary sweetness is coming from stevia.

In our co-pending US patent application 2009/004355, filed concurrently herewith, we disclose methods to use stevia extracts, including rebaudioside-A, to remove brightness from the taste of erythritol. One aspect of the inventive compositions is that it works even when the level of sweetness from erythritol becomes the primary source of sweetness in the composition, In essence the bright notes are removed even when the formula is primarily erythritol.

### Complex Sweeteners

A variety of complex sweeteners can be used. In each case the resultant composition retains the some flavor notes of the complex sweetener. The ratio of erythritol to complex sweetener can be any ratio that provides a stable, homogeneous solid composition upon cooling.

### Sweetening Compositions

The preferred ratio of erythritol to secondary sweetener is at least 50% by weight, and even more preferred is 80% by weight of the sweetening composition.

The secondary sweetener can optionally include a simple sugar, a sugar alcohol or or any other sweetener that results in the desired taste profile. While described in terms of a single secondary sweetener and erythritol, the compositions contemplated herein can be a mixture of several secondary sweeteners and erythritol. The composition can contain other sweeteners, sugars, fibers, or sugar alcohols or nutritional components that are stable under melt conditions.

The compositions of the present invention have SES's that are higher than erythritol, preferably greater than 0.7 grams SES per gram, and more preferably greater than 0.75, and even more preferably greater than 0.8 grams SES per gram.

The compositions of the present invention have energy contents less than that of a nutritive sugar, preferably less than 10 kcals per tsp of SES, and more preferably greater than 8 kcals per tsp of SES, and even more preferably greater than 6 kcals per tsp of SES.

Unlike dry blends of the ingredients used in the inventive composition, the sweetening compositions of the present invention are a crystalline matrix. This form assures consistent delivery and taste in a system and prevents parts of the composition from having distinctly different tastes.

The compositions of the present invention may contain additional non-sweetening ingredients as well, including flavors, aromas, other nutritional components, and mixtures thereof. For example the compositions can contain a fiber(s), a vitamin(s), a mineral(s), and/or an herbal supplement(s).

As used herein, unless otherwise indicated, the term "flavor" means any food-grade material that may be added to the present compositions to provide a desired flavor to a foodstuff. Flavors useful in the present invention include, for example, cream, hazelnut, vanilla, chocolate, cinnamon, pecan, lemon, lime, raspberry, peach, mango, vanillin, butter, butterscotch, tea, orange, tangerine, caramel, strawberry, banana, grape, plum, cherry, blueberry, pineapple, elderberry, watermelon, bubblegum, cantaloupe, guava, kiwi, papaya, coconut, mint, spearmint, derivatives, and combinations thereof.

As used herein, unless otherwise indicated, the term "aroma component" means any food-grade volatile substance that may be employed to produce a desired scent, for example, when mixed with a foodstuff. Aromas useful in the present invention include, for example, essential oils (citrus oil), expressed oils (orange oil), distilled oils (rose oil), extracts (fruits), anethole (liquorice, anise seed, ouzo, fennel), anisole (anise seed), benzaldehyde (marzipan, almond), benzyl alcohol (marzipan, almond), camphor (cinnamomum camphora), cinnamaldehyde (cinnamon), citral (citronella oil, lemon oil), d-limonene (orange) ethyl butanoate (pineapple), eugenol (clove oil), furaneol (strawberry), furfural (caramel), linalool (coriander, rose wood), menthol (peppermint), methyl butanoate (apple, pineapple), methyl salicylate (oil of wintergreen), neral (orange flowers), nerolin (orange flowers), pentyl butanoate (pear, apricot), pentyl pentanoate (apple, pineapple), sotolon (maple syrup, curry, fennugreek), strawberry ketone (strawberry), substituted pyrazines, e.g., 2-ethoxy-3-isopropylpyrazine; 2-methoxy-3-sec-butylpyrazine; and 2-methoxy-3-methylpyrazine (toasted seeds of fenugreek, cumin, and coriander), thujone (juniper, common sage, Nootka cypress, and wormwood), thymol (camphor-like), trimethylamine (fish), vanillin (vanilla), and combinations thereof. Preferred aroma components according to the present invention include, essential oils (citrus oil), expressed oils (orange oil), distilled oils (rose oil), extracts (fruits), benzaldehyde, d-limonene, furfural, menthol, methyl butanoate, pentyl butanoate, salts, derivatives, and combinations thereof.

The aroma component may be present in any amount in the composition. Preferably, the aroma component is present in an amount from about 2- to about 10-times the detectable amount. More preferably, the aroma component is present in an amount from about 2- to about 5-times the detectable amount. As used herein, unless otherwise indicated, the term "detectable amount" is the amount of the aroma component required to produce a scent detectable in the foodstuff. The gas-releasing system of the present invention enhances the sensory experience by releasing and dispersing the aroma component(s).

The formulation can be packaged in packets, as a bulk sweetener, in cubes, or any normal sugar forms.

Sweetener cubes are cohesive non-free flowing compositions that include bulking agents. Bulking agents are typically crystalline carbohydrates, such as, sucrose, which are also available in combination with high intensity sweeteners. More recently a number of lower caloric burden bulking agents have entered the market. Some of these lower caloric burden bulking agents have physical and sensory characteristics similar to sucrose, and others have only a few physical or sensory characteristics similar to sucrose and/or some undesirable characteristics.

As used herein, unless otherwise indicated, the term "binder" refers to any food-grade material that is suitable for facilitating the pressing and formation of tablets. The selection of an appropriate binder is not critical and embraces any conventional binder so long as the binder does not substantially interfere with the self-mixing or the organoleptic properties of the foodstuff. Non-limiting examples of suitable binders useful in the present invention, include microcrystalline cellulose, gum tragacanth, gelatin, leucine, lactose, and combinations thereof. Preferably, the binder, if used, accounts for about 10% to about 15%, by weight of the total composition.

Compositions of the present invention may be made by any methods known to those skilled in the art. These methods produce a solid, stable, no-sticky, homogeneous, table top sweetener from erythritol and a secondary sweetener. All of the methods involve melting of erythritol and suspending a secondary sweetener or sweeteners in the melted material to form the solid matrix after cooling. In a preferred embodiment the erythritol is only partially melted creating a viscous material which provides a much more uniform matrix. To make compositions of the present invention, the following processes can be used:

For solid secondary sweeteners, the processes that can be used include:
a. melting the erythritol;
b. mixing in the secondary sweetener;
c. cooling the mixture while keeping it mixed until the melt sets; and
d. grinding the set melt into appropriate particle sizes.
Alternatively the order can be adjusted for solid compositions as follows:
a. combining the secondary sweetener and erythritol to form a mixture;
b. melting the mixture;
c. cooling the melted mixture while mixing until the melt sets; and
d. grinding the set melt into appropriate particle sizes.
For secondary sweeteners in syrup form the processes that can be used include:
a. melting the erythritol;
b. adding the secondary sweetener syrup to the melted erythritol,
c. mixing the secondary sweetener syrup and the melted erythritol until the mixture boils until an adequate amount of the water is removed;
d. cooling the mixture while mixing until the melt sets; and
e. grinding the set melt into appropriate particle sizes.
Alternatively, the order can be adjusted for using secondary sweetener syrup as follows:
a. Combining a secondary sweetener syrup with erythritol;
b. melting the erythritol/syrup mixture;
c. bringing the mixture to a boil until an adequate amount of the water is removed;
f. cooling the mixture while mixing until the melt sets; and
d. grinding the set melt into appropriate particle sizes.

In all cases, during the cooling phase, agitation can be applied. This can accelerate the final crystallization and solid formation. The agitation can be scraping or other means known to those skilled in the art.

The secondary sweetener can be any noted above and can include blends of secondary sweeteners.

The amount of erythritol and of the secondary sweeteners can be any amount that provides for the desired taste profile and calorie content. Preferably, the erythritol makes up over 50% by weight of the composition, even more preferred the erythritol makes up over 60% by weight of the composition, and even more preferred the erythritol makes up over 80% by weight of the composition.

An important aspect is the control of the degree of melting of the erythritol. We have found that by providing only enough heat to melt a portion of the erythritol used in the composition, a much more homogeneous matrix can be made. This embodiment not only provides a more homogeneous matrix but also saves energy, and simplifies process and quality controls. One particularly important benefit is the elimination of the need to mix the composition during cooling. This greatly simplifies the type of equipment that is needed to make a matrix wherein a solid secondary sweetener is suspended within a melted primary sweetener.

In additional preferred embodiment, the following processes can be used
For solid secondary sweeteners, the processes include:
a. partially melting the erythritol;
b. mixing in the secondary sweetener;
c. maintaining the heat input to provide a slurry of sufficient thickness to maintain a stable suspension of the secondary sweetener in the partially melted erythritol during cooling without agitation;
d. cooling the slurry to room temperature; and
e. grinding the resulting solid into desired particle sizes.
Alternatively the order of the process steps can be adjusted for solid compositions as follows:
a. combining the secondary sweetener and erythritol to form a mixture;
b. partially melting the mixture;
c. maintaining the heat input to provide a slurry;
d. cooling the slurry to room temperature, wherein the slurry has sufficient thickness to maintain a stable suspension of the secondary sweetener in the partially melted erythritol during cooling without agitation; and
e. grinding the set melt into appropriate particle sizes.
For secondary sweeteners in syrup form the processes that can be used include
a. partially melting the erythritol;
b. adding the secondary sweetener syrup to the melted erythritol,
c. bringing the mixture to a boil until an adequate amount of the water is removed; while
d. maintaining the heat input to provide a slurry of sufficient thickness to maintain a stable suspension the secondary sweetener in the partially melted erythritol during cooling without agitation;
e. cooling the mixture; and
f. grinding the set melt into appropriate particle sizes.
Alternatively, the order can be adjusted for using a complex sweetener syrup as follows:
a. Combining a secondary sweetener syrup with erythritol;
b. Partially melting the erythritol/syrup mixture;
c. bringing the mixture to a boil until an adequate amount of the water is removed; while
d. maintaining the heat input to provide a slurry of sufficient thickness to maintain a stable suspension, the secondary sweetener in the partially melted erythritol during cooling without agitation
g. cooling the mixture; and
e. grinding the set melt into appropriate particle sizes.

The secondary sweetener in the melted alternatives can be any noted above and can include blends or secondary sweeteners.

The degree of melting can be any amount that provides for a homogeneous suspension. The degree of melting of the erythritol can be between about 10% and about 90% of the matrix and more preferably between about 25% and about 90% of the matirx. Most preferable, the degree of melting is the maximum amount of melting that maintains a slurry.

The melting can done in a confectioner's pan, a kettle, an agitated vessel, a heated screw feeder or extruder, or the like. It can be continuous, batch or semi-batch. Heat can be provided by any means know to those skilled in the art, but hot water or steam are preferred to avoid over heating. Cooling can be done batch-wise or continuously, or a combination. It can be done in pans, on a cooling wheel or belt, or any other means known to those skilled in the art.

The amount of erythritol and of the secondary sweeteners can be any amount that provides for the desired taste profile and calorie content. Preferably, the erythritol makes up over 50% of the mixture, more preferably the erythritol makes up over 60% of the composition, and even more preferably the erythritol makes up over 80% of the composition.

The process can also be used to make compositions that include heat stable high intensity sweeteners. This permits independent control over flavor and sweetness levels. One especially useful aspect of the invention is that the homogeneous nature of the resultant compositions ensure even and stable distribution of the high intensity sweetener, and prevent separation, which minimized highly sweet areas common with simple dry blend compositions.

One preferred embodiment is the use of a continuous heated screw feeder or extruder, wherein the screw feeder preferably has a length that is about 10 times its diameter, even more preferably about 25 times its diameter and even more preferably about 100 times its diameter.

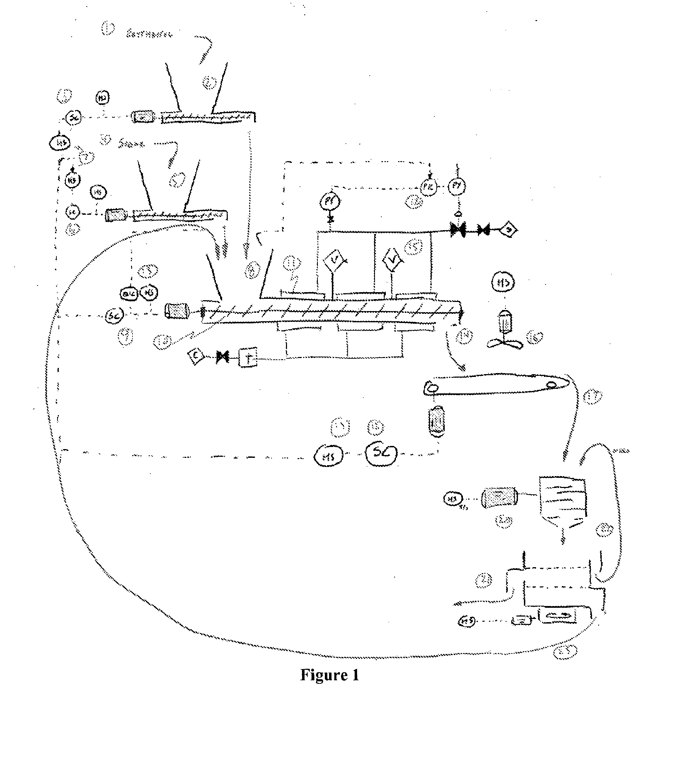

Turning to the process depicted in Figure 1, erythritol (1) is placed a screw feeder (2) that discharges into the hopper of screw melter hopper (8). The discharge rate from the screw feeder (2) is determine by a speed controller (3). The speed is set as a ratio of the screw speed in the melter (10) by a ratio controller (7). A second sweetener (4), such as sugar, which melts at a higher temperature than the first carbohydrate (1), is placed a second screw feeder (5) that also discharges into the hopper of screw melter hopper (8). The discharge rate from the screw feeder (5) is determined by a speed controller (6). The speed is set as a ratio of the screw speed in the melter (10) by a ratio controller (7).

The materials feed to the screw melter hopper (8) are moved through the screw melter by screw (10). The speed of the screw is maintained by speed controller (9). Steam is applied to the jacket (11) of screw melter to partially melt the erythritol (1). Steam pressure, which determines the degree of melting, is maintained by pressure controller (12). The set point of pressure controller (12) is set to maintain specific power load on screw (13). The power used by the melter screw (10) correlates directly with the degree of melting of the erythritol. In other words, power goes up as the material begins to melt, peaks, and then falls when all of the material is melted. By maintaining a specific power point, a specific amount of partial melting can be maintained.

Any vapor released during the melting is vented at intermediate ports (15) or at screw melter discharge (14). The discharge from screw melter (14) containing melted and solid erythritol (1) and solid phase of secondary sweetener (4) is placed on cooling belt (17) to re-solidify. Cooling is accelerated by cool air (16). The speed of the cooling belt is maintained by speed controller (18). The speed is set as a ratio of the screw [10] speed in the melter (10) by ratio controller (19). Cooled material from cooling belt (17) is feed to a mill (20), which discharges into a screen, (not shown). Oversized particles (22) from the screen are returned to the mill (20). Undersized particles (23) are returned to the screw melter hopper (8). The remaining material (21) is collected for packaging.

One aspect of the processes used to make the present invention is that the temperature to provide the homogeneous matrix does not need to reach the melting point of the secondary sweeteners. This permits lower processing temperatures than would otherwise be needed. Using the such temperature minimizes and can eliminate the development of un-desirable flavor notes.

White the use of power to control the degree of melt is illustrated with the screw feeder above, it is within the level of those skilled in the art that the method can also be used in an agitated kettle.

Mimmizing the amount of heat needed is an important aspect. To this end it is useful that the secondary sweeteners do not actually melt in the processing of the solid matrix. While this has been desirable in the past to assure homogeneity of the final solid matrix it will be now clear to those skilled in the art that using the methods disclosed herein, it is no longer necessary. This not only saves energy, but it speeds up processing time for heating and cooling. To this end it is useful that secondary sweeteners have melting points above 150 °C.

The continuous screw melter provides short residence time under melted conditions. Given its high surface to volume configuration heat exposure of the ingredients can be at a minimum and the resultant off notes from excessive heat are also minimized.

The following examples are provided to further illustrate the compositions of the present invention. These examples are illustrative only and are not intended to limit the scope of the invention in any way.

### EXAMPLES

### Example 1: Erythritol - Turbinado Sugar

80 grams of erythritol and 20 grams of turbinado sugar are weighed and placed in a 30.48 cm (12 inch) Teflon lined frying pan. The pan was heated by gas until the erythritol was melted. When melted the temperature was approximately 140°C. The contents were placed in a 10.16 x 15.24 cm (4 x 6 inch) aluminum baking pan and allowed to cool over ice water. The turbinado sugar sank to the bottom of the pan and two clear layers were present in the hardened mass. The resultant composition had a pleasant sweet taste with a slight caramel taste.

### Example 2: Erythritol - Turbinado Sugar

80 grams of erythritol and 20 grams of turbinado sugar were weighed. The erythritol was placed in a 30.48 cm (12 inch) Teflon lined frying pan. The pan was heated by gas until the erythritol was melted. When melted the temperature was ∼140 deg c. The contents were placed in a 10.16 x 15.24 cm (4 x 6 inch) aluminum baking pan and the sugar sprinkled on top and then the pan allowed to cool over ice water. The turbinado sugar sank to the bottom of the pan and several layers were present in the hardened mass. The resultant composition had a pleasant sweet taste with little caramel taste.

The composition has a cool, distinctively blueberry taste. 10 grams are placed in a cup of hot water. The beverage has a sweet blueberry taste. After the beverage is consumed, the cup has a small amount of blue particles on the bottom.

### Example 3: Erythritol - Turbinadao Sugar

160 grams of erythritol and 40 grams of turbinado sugar were weighed. The erythritol was placed in a 30.48 cm (12 inch) Teflon lined frying pan. The pan was heated by gas until the erythritol was melted. When melted the temperature was approximately 140 deg C. The sugar was mixed with 2.4 grams of water and place in a 15.24 cm (6 inch) saucepan and heated until the sugar was melted to a homogeneous, non-crystalline state at which time the hot, melted erythritol was added. When the erythritol was added the turbinado sugar began to crystallize out. The contents were placed in a 10.16 x 15.24 cm (4 x 6 inch) aluminum baking pan and then the pan allowed to cool over ice water. The turbinado sugar sank to the bottom of the pan and several layers were present in the hardened mass. The resultant composition had a pleasant sweet taste with slight caramel taste.

### Example 4: Erythritol - Turbinado Sugar

160 grams of erythritol and 40 grams of turbinado sugar were weighed and placed in a 15.24 cm (6 inch) sauce pan. The pan was heated by gas until the erythritol was melted. When melted the temperature was ∼140 deg C. 2 grams of water were added. The contents were placed in a 10.16 x 15.24 cm (4 x 6 inch) aluminum baking pan and allowed to cool over ice water. The mass was slow to harden and remained sticky. When scraped from the pan it became crystalline. The resultant composition had a pleasant sweet taste with a slight caramel taste.

### Example 5 Erythritol - Turbinado Sugar

320 grams of erythritol and 80grams of turbinado sugar were weighed. The erythritol was placed in a 30.48 cm (12 inch) Teflon lined frying pan. The pan was heated by gas until the erythritol was melted. When melted the temperature was ∼ 140 deg C. The sugar was mix with 4 grams of water and place in a 6 inch sauce pan and heated until the sugar was melted to a homogeneous, non-crystalline state at which time the hot, melted erythritol was added. When the erythritol was added the turbinado sugar began to crystallize out. The contents were placed in a 10.16 x 15.24 cm (4 x 6 inch) aluminum baking pan and then the pan allowed to cool over ice water. The turbinado sugar sank to the bottom of the pan and several layers were present in the hardened mass. The resultant composition had a pleasant sweet taste with slight caramel taste.

### Example 6 Erythritol - Turbinado Sugar

Same as experiment 5 with 3.4 grams of water. Similar results.

### Example 7 Erythritol - Turbinado Sugar

Same as experiment 5 with 5.5 grams of water, 40 grams of turbinado and 160 grams of erythritol. Similar results.

### Example 8 Erythritol - Turbinado Sugar

Same as experiment 5 with 4.3 grams of water, 80 grams ofturbinado and 160 grams of erythritol. Similar results.

### Example 9 Erythritol - Turbinado Sugar

160 grams of erythritol and 40 grams of turbinado sugar were weighed. The erythritol was placed in a 30.48 cm (12 inch) Teflon lined frying pan. The pan was heated by gas until the erythritol was melted. When melted the temperature was ∼140 deg C. The sugar place in a 15.24 cm (6 inch) sauce pan and melted. The temperature was ∼88°C (∼190F). The melted sugar was place in the erythritol and heated until a solution was made. The contents were placed in a 10.16 x 15.24 cm (4 x 6 inch) aluminum baking pan and allowed to cool over ice water. The composition was very slow to become solid and was place in a freezer overnight after which it hardened. The resultant composition had a pleasant sweet taste with a strong caramel taste.

### Example 10 Erythritol - Turbinado Sugar

160 grams of erythritol and 40 grams of turbinado sugar were weighed and placed in a 30.48 cm (12 inch) Teflon lined frying pan. The pan was heated by gas until the erythritol and sugar were melted. When melted the temperature was ∼190 deg C. The contents were placed in a 10.16 x 15.24 cm (4 x 6 inch) aluminum baking pan and allowed to cool over ice water. The composition was very slow to become solid and was place in a freezer overnight after which it hardened. The resultant composition had a pleasant sweet taste with a strong caramel taste.

### Example 11 Erythritol - Turbinado Sugar

Erythritol - Turbinado Sugar -160 grams of erythritol and 40 grams of turbinado sugar were weighed and placed in a 15.24 cm (6 inch) sauce pan. The pan was heated by gas and stired until the erythritol and sugar were well mixed and around 120 deg C. The contents had the consistency of apple sauce and were placed in a 10.16 x 15.24 cm (4 x 6 inch) aluminum baking pan and allowed to cool over ice water. The composition hardened in 2 minutes. The resultant composition had a pleasant sweet taste with no caramel taste.

### Example 12 Erythritol - Turbinado Sugar

Experiment 11 was repeated with 320 grams of erythritol and 80 grams of turbinado sugar. Similar results were obtained.

### Example 13 Erythritol - Turbinado Sugar

Experiment 11 was repeated with and additional 60 grams of ground material from experiment 11 added to the saucepan (260 grams total). Similar results were obtained. No caramel taste or off notes were observed.

### Example 14 Ertythritol - Turbinado Sugar

Experiment 11 was repeated with and additional 60 grams of ground material from experiment 12 added to the saucepan (260 grams total). Similar results were obtained. No caramel taste or off notes were observed.

### Example 15 Erythritol - Turbinado Sugar

Experiment 11 was repeated with 1700 grams of erythritol and 425 grams of turbinado sugar. Similar results were obtained.

### Example 16 Erythritol-Turbinado Sugar

45.4 kg (100 lbs) of Erythritol and 9.07 kg (20 lbs) of Turbinado Sugar were placed in a confectionery pan which had a direct fired heat source. Heat was applied until the material in the pan had the consistency of apple source and then the heat was turned off. A metal hoop was place in the pan to continouly break up the mass as it cooled. The resulting particles were homogeneous

### Example 17 Erythritol - Turbinado Sugar

A solid matrix of Erythritol and Turbinado sugar was made as follows
Weighing 4 kg of erythritol (Cargill Inc, Eridex) into a 38 liters (10 gallon) pot, weighting 1 kg of turbinado sugar (Sugar in the Raw) into the same pot, Dumping the contents into a Groen Electric Steam Kettle equipped with a scraper bland and a bridge breaker blade. Setting the steam pressure to 10 (steam pressure (∼2.82 x 10⁵Pa) (41 psig)) setting the agitator to 5. Measuring the power on the agitator. When the power peaks continue monitoring until it drops 10% remove heat and agitators, dump into pans allow to cool in ambient conditions for 1 hour grind to size in a Kitchen Aid mixer with a grain grinder attachment.

### Example 17 Erythritol - Turbinado Sugar

45.4 kg (100 lbs) of Erythritol and 9.07 kg (20 lbs) of Turbinado Sugar were mixed and feed to a screw feeder. The feeder is 2.54 cm (1 inch) diameter and 91.44 cm (3 feet) long with a screw capable of transferring 20 kg/hr through the tube. The feeder is constructed or stainless steel and is jacketed with a 3.08 cm (2 inch) pipe with and inlet for 3.45 x 10⁵ Pa (50 psig) steam and an outlet of condensate. Dry blended erythritol and turbinado sugar are feed at one end and a slurry the consistency of apple sauce is discharged at the other end into pans. Steam pressure is adjusted to maintain the correct consistency by and operator. Alternatively the power required to drive the screw can be measured and used to control the steam pressure.

Unless otherwise defined, all technical and scientific terms used herein have the same meaning as commonly understood by one of ordinary skill in the art to which this invention pertains.

## Claims

1. A tabletop solid sweetening composition comprising erythritol and a secondary sweetener in a single solid matrix, wherein the secondary sweetener is selected from the group consisting of muscovado, turbinado sugar, demerara sugar, and combinations thereof.

2. The solid sweetening composition of claim 1, wherein the composition provides more than 0.7 grams of SES per gram and the composition contains less than 16 kcals per 4 gram of SES.

3. The solid sweetening composition of claim 1, wherein the secondary sweetener has a melting point of at least 150 °C.

## Patentansprüche

1. Festes Tafel-Süßungsmittel, umfassend Erythrit und einen Zweitsüßstoff in einer einzigen festen Matrix, wobei der Zweitsüßstoff aus der Gruppe bestehend aus Muskovado, Turbinadozucker, Demerarazucker und Kombinationen davon ausgewählt ist.

2. Festes Süßungsmittel nach Anspruch 1, wobei das Mittel mehr als 0,7 Gramm SES pro Gramm bereitstellt und das Mittel weniger als 16 kcal pro 4 Gramm SES enthält.

3. Festes Süßungsmittel nach Anspruch 1, wobei der Zweitsüßstoff einen Schmelzpunkt von mindestens 150°C aufweist.

## Revendications

1. Composition d'édulcorant de table solide comprenant de l'érythritol et un édulcorant secondaire dans un matrice solide unique, l'édulcorant secondaire étant choisi dans le groupe constitué de moscovade, de sucre de turbinado, de cassonade, et de combinaisons de ceux-ci.

2. Composition d'édulcorant solide selon la revendication 1, **caractérisée en ce que** la composition fournit plus d'environ 0,7 gramme de SES par gramme et la composition contient moins de 16 kcal pour 4 grammes de SES.

3. Composition d'édulcorant solide selon la revendication 1, **caractérisée en ce que** l'édulclorant secondaire possède un point de fusion d'au moins 150°C.
